# EUROPEAN PATENT APPLICATION

(11) **EP 4 715 968 A1**
(43) Date of publication of application: **25.03.2026**
(21) Application number: 25202088.8
(22) Date of filing: 15.09.2025
(51) Int. Cl.: H01M 50/103, H01M 50/119, H01M 50/159, H01M 50/166, H01M 50/15, H01M 50/55, H01M 50/553

(54) **SECONDARY BATTERY AND METHOD OF MANUFACTURING SAME**

(30) Priority: 19.09.2024 KR 20240126511
(71) Applicant: SAMSUNG SDI CO., LTD., Yongin-si, Gyeonggi-do 17084 (KR)
(72) Inventor: Byeon, Junho, 17084 Yongin-si, Gyeonggi-do (KR)
(74) Representative: Meissner Bolte Partnerschaft mbB

(57) **Abstract**

A secondary battery, including an electrode assembly having a first surface and a second surface facing each other, a lower case including a lower surface covering the first surface of the electrode assembly and first to fourth lower side surfaces extending from the lower surface, and an upper case including an upper surface bent and extending from the fourth lower side surface of the lower case and covering the second surface of the electrode assembly and first to third upper side surfaces extending from the upper surface, wherein the first to third upper side surfaces of the upper case are respectively coupled to the first to third lower side surfaces of the lower case.

## Description

### BACKGROUND

### 1. Field

The present invention relates to a secondary battery and a method of manufacturing the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present invention, and therefore, it may contain information that does not constitute related (or prior) art.

### SUMMARY

The present invention concerns a secondary battery, including an electrode assembly having a first surface and a second surface facing each other, a lower case including a lower surface covering the first surface of the electrode assembly and first to fourth lower side surfaces extending from the lower surface, and an upper case including an upper surface and first to third upper side surfaces extending from the upper surface, the upper surface being bent and extending from the fourth lower side surface of the lower case and covering the second surface of the electrode assembly, wherein the first to third upper side surfaces of the upper case are respectively coupled to the first to third lower side surfaces of the lower case.

The first to third upper side surfaces of the upper case may each include first to third overlapping portions overlapping each other to cover at least a portion of the first to third lower side surfaces of the lower case.

Widths of the first to third overlapping portions may be 1 mm or more based on a direction in which the first to third upper side surfaces of the upper case extend from the upper surface of the upper case.

The upper case and the lower case may be welded and coupled at the first to third overlapping portions.

A bending line along which the upper case is bent is at a contacting portion where the upper surface of the upper case and a fourth lower side surface of the first to fourth lower side surfaces of the lower case contact each other.

A vertical distance between the lower surface of the lower case and the bending line may be 102% or more of a vertical distance between the lower surface of the lower case and the second surface of the electrode assembly.

The contacting portion may include a groove formed on outer surfaces of the upper case and the lower case along the bending line.

The contacting portion may include a groove formed on inner surfaces of the upper case and the lower case along the bending line.

The bending line may include a plurality of preliminary bending lines parallel to each other, and the contacting portion may include a groove along each of the preliminary bending lines.

The secondary battery may further include an electrode terminal electrically connected to the electrode assembly, wherein the electrode terminal is on one surface of the lower case.

The electrode terminal may be on the fourth lower side surface of the lower case.

The upper case and the lower case may be at least partially made of a stainless steel material.

According to a further aspect the invention concerns a method of manufacturing a secondary battery, including preparing an electrode assembly, inserting the electrode assembly into a lower case, bending an upper case extending from the lower case, and coupling the upper case and the lower case, wherein the electrode assembly includes a first surface and a second surface facing each other, the lower case includes a lower surface covering the first surface of the electrode assembly and first to fourth lower side surfaces extending from the lower surface, and the upper case includes an upper surface extending from a fourth lower side surface of the first to fourth lower side surfaces of the lower case and covering the second surface of the electrode assembly, the upper case including first to third upper side surfaces extending from the upper surface.

A bending line may be formed at a contacting portion where the upper surface of the upper case and the fourth lower side surface of the lower case contact each other, and the bending may include bending the upper surface of the upper case along the bending line.

The contacting portion may include a groove formed along the bending line.

The bending line may include a plurality of preliminary bending lines parallel to each other, the method may further include forming a groove along each of the plurality of preliminary bending lines, resulting in a plurality of grooves, the contacting portion including the plurality of grooves.

A vertical distance between the lower surface of the lower case and the bending line may be 102% or more of a vertical distance between the lower surface of the lower case and the second surface of the electrode assembly.

The first to third upper side surfaces of the upper case may each include first to third overlapping portions overlapping each other to cover at least a portion of the first to third lower side surfaces of the lower case, and the coupling may include welding-coupling the upper case and the lower case in the first to third overlapping portions.

Widths of the first to third overlapping portions may be 1 mm or more based on a direction in which the first to third upper side surfaces of the upper case extend from the upper surface of the upper case.

An electrode terminal may be formed on the fourth lower side surface of the lower case, and the inserting may include electrically connecting the electrode assembly to the electrode terminal.

These and other aspects and features of the present invention will be described in or will be apparent from the following description of embodiments of the present invention.

However, aspects and features of the present invention are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present invention, and further describe aspects and features of the present invention together with the detailed description of the present invention. Thus, the present invention should not be construed as being limited to the drawings.

Features will become apparent to those of ordinary skill in the art by describing in detail exemplary embodiments with reference to the attached drawings, in which:
FIG. 1 illustrates a cross-sectional view of a secondary battery according to one or more embodiments of the present invention;
FIG. 2 illustrates a perspective view of an example of a lower case and an upper case according to one or more embodiments of the present invention;
FIG. 3 illustrates a perspective view of an example of a lower case and an upper case according to one or more embodiments of the present invention;
FIG. 4 illustrates a cross-sectional view of a contacting portion between a lower case and an upper case according to one or more embodiments of the present invention;
FIG. 5 illustrates an enlarged cross-sectional view of an example of a contacting portion according to one or more embodiments of the present invention;
FIG. 6 illustrates an enlarged cross-sectional view of an example of a contacting portion according to another embodiment of the present invention;
FIG. 7 illustrates a cross-sectional view of an example of a lower case and an upper case according to one or more embodiments of the present invention;
FIG. 8 illustrates a cross-sectional view of an example of a lower case and an upper case according to one or more embodiments of the present invention;
FIG. 9 illustrates a state in which a lower case and an upper case are coupled according to one or more embodiments of the present invention;
FIG. 10 illustrates a state in which a lower case and an upper case are coupled according to a comparative example; and
FIG. 11 illustrates a flowchart for explaining a method of manufacturing a secondary battery according to one or more embodiments of the present invention.

### DETAILED DESCRIPTION

Example embodiments will now be described more fully hereinafter with reference to the accompanying drawings; however, they may be embodied in different forms and should not be construed as limited to an embodiments set forth herein. Rather, these embodiments are provided so that this invention will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, embodiments of the present invention will be described, in detail, with reference to the accompanying drawings. The terms or words used in this specification and claims should not be construed as being limited to the usual or dictionary meaning and should be interpreted as meaning and concept consistent with the technical idea of the present invention based on the principle that the inventor can be his/her own lexicographer to appropriately define the concept of the term to explain his/her invention in the best way.

The embodiments described in this specification and the configurations shown in the drawings are only some of the embodiments of the present invention and do not represent all of the technical ideas, aspects, and features of the present invention. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

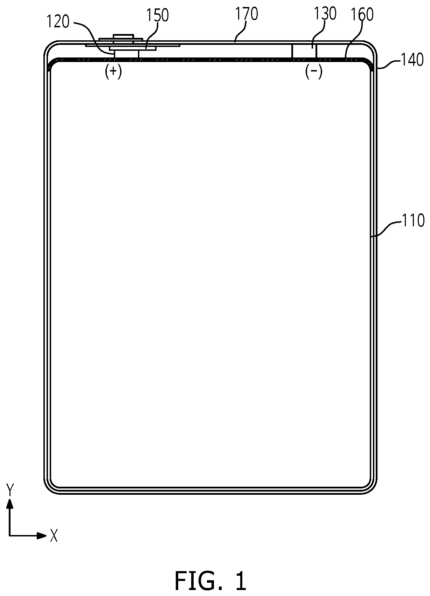

FIG. 1 illustrates a cross-sectional view of a secondary battery according to an embodiment of the present invention. Referring to FIG. 1, a secondary battery includes at least one electrode assembly 110 wound or laminated with a separator, which is an insulator, interposed between a positive electrode plate and a negative electrode plate, a case 140 in which the electrode assembly 110 is accommodated, a cap assembly 170 formed on one surface of the case 140, and an insulating member 160 disposed between the cap assembly 170 and the electrode assembly 110.

The positive electrode plate and the negative electrode plate may include a coated portion, which is a region where an active material is applied to a current collector formed of a thin metal foil, and a non-coated portion where no active material is applied.

According to an embodiment, the positive and negative electrode plates may be stacked with a separator, which is an insulator, interposed therebetween. For example, the electrode assembly 110 may have a structure in which a plurality of sheets of positive and negative electrode plates are alternately stacked with a separator therebetween. However, the positive and negative electrode plates may be wound with a separator interposed therebetween.

The case 140 forms an overall external appearance of the secondary battery. According to an embodiment, the case 140 may be made of stainless steel (SUS). In some embodiments, the case 140 may be made of a conductive metal such as aluminum, an aluminum alloy, or nickel-plated steel. Additionally, the case 140 may provide a space in which the electrode assembly 110 is accommodated. The shape of the secondary battery is not limited to the range shown in FIG. 1, and may be any shape such as a prismatic shape, a cylindrical shape, a pouch shape, or the like.

The case 140 may have an opening formed on one side surface that is in vertical contact with one surface on which the cap assembly 170 is formed. The case cover may be coupled to the opening of the case 140 to seal the case 140. The case 140 and the cap assembly 170 may be made of a conductive material.

An electrode terminal may be formed in the cap assembly 170. A positive electrode terminal, a negative electrode terminal, an electrolyte injection port, and a vent portion may be formed in the cap assembly 170. The cap assembly 170 may include a cap plate. The cap plate may be formed as a separate plate from the case, or may be formed integrally with the case. The cap plate may correspond to a portion of the case.

A positive electrode substrate tab electrically connected to the positive electrode uncoated portion may be formed on one side of the positive electrode plate, and a negative electrode substrate tab electrically connected to the negative electrode uncoated portion may be formed on one side of the negative electrode plate. The positive electrode substrate tab may be formed at a specific position of one side of the positive electrode plate, and the negative electrode substrate tab may be formed at a specific position of one side of the negative electrode plate.

The positive electrode substrate tab and the negative electrode substrate tab may be formed on one side of the electrode assembly 110 in the same direction. A plurality of positive electrode substrate tabs formed on a plurality of positive electrode plates may be coupled to each other to form a first current collector tab 120. In addition, a plurality of negative electrode substrate tabs formed on a plurality of negative electrode plates may be coupled to each other to form a second current collector tab 130.

The first current collector tab 120 and the second current collector tab 130 may be formed at different positions on one side of the electrode assembly 110. For example, the first current collector tab 120 and the second current collector tab 130 may be formed on one side of the electrode assembly 110 to be spaced apart by a predetermined distance in the first direction (X axis). Accordingly, the first current collector tab 120 and the second current collector tab 130 may not be in contact with each other.

The first current collector tab 120 may be formed on one side of the electrode assembly 110, and the second current collector tab 130 may be formed on the other side of the electrode assembly 110. Accordingly, the first current collector tab 120 and the second current collector tab 130 may not be in contact with each other.

The insulating member 160 may be disposed on an upper portion of the electrode assembly 110. According to an embodiment, an adhesive layer coated with an adhesive is formed on one surface of the insulating member 160, and the insulating member 160 and the electrode assembly 110 may be adhered by the adhesive layer.

According to an embodiment, the positive electrode plate may be electrically connected to the electrode terminal 150. The first current collector tab 120 connected to the positive electrode plate may penetrate the insulating member 160 to be electrically connected to the electrode terminal 150. The first current collector tab 120 may be connected to the electrode terminal 150 through a strip terminal, for example, but the electrode terminal 150 may be a positive electrode terminal.

The electrode terminal 150 electrically connected to the positive electrode plate may be coupled to the cap assembly 170. For example, the electrode terminal 150 may be disposed to protrude outwardly through the cap assembly 170.

In an embodiment, the negative electrode plate may be electrically connected to the case 140. The case 140 may have a negative electrode. The second current collector tab 130 connected to the negative electrode plate may be electrically connected to the case 140 by penetrating the insulating member 160. The second current collector tab 130 may be connected to the case 140 through a strip terminal, but the method of connecting may vary.

The secondary battery may be a lithium secondary battery or a sodium secondary battery. However, the secondary battery includes all batteries capable of repeatedly providing electricity through charging and discharging.

The configuration of the secondary battery shown in FIG. 1 is only an example, and in some embodiments, other components may be included in addition to the illustrated components, and some components may be omitted. Furthermore, the shape, positional relationships, and other aspects of respective components of the secondary battery shown in FIG. 1 may be appropriately modified.

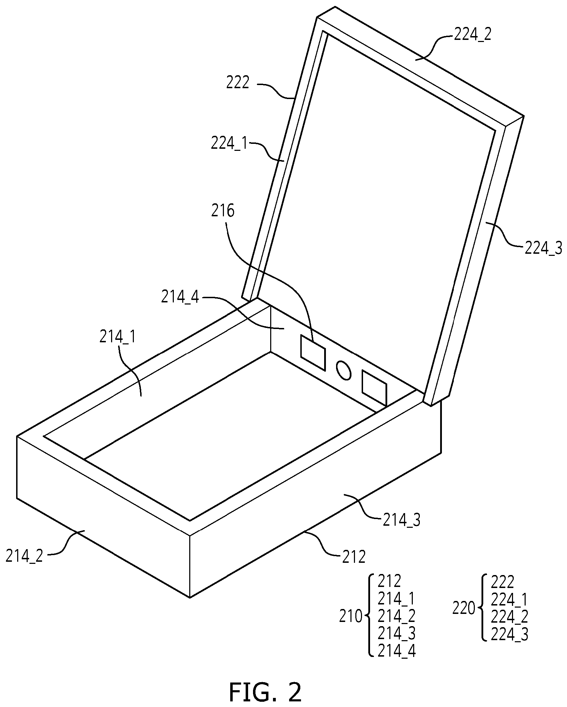

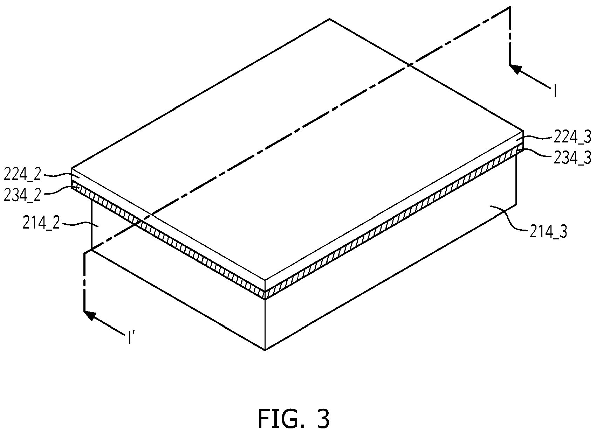

FIG. 2 and FIG. 3 illustrate perspective views of an example of a lower case 210 and an upper case 220 according to an embodiment of the present invention.

Referring to FIG. 2, a case for the secondary battery includes a lower case 210 and an upper case 220. The lower case 210 may provide a space for accommodating the electrode assembly. The upper case 220 may extend from the lower case 210 and seal the lower case 210 in which the electrode assembly is accommodated. The upper case 220 may be integrally formed with the lower case 210, but the forming may vary.

The lower case 210 may include a lower surface 212 and first to fourth lower side surfaces 214_1 to 214_4 extending from the lower surface 212. The first to fourth lower side surfaces 214_1 to 214_4 may extend substantially vertically from the lower surface 212 (in the orientation shown). Openings may be formed at end portions of the first to fourth lower side surfaces 214_1 to 214_4 to face the lower surface 212. The electrode assembly may be accommodated in the lower case 210 through the opening.

In an embodiment, an electrode terminal 216 may be formed on one side surface of the lower case 210. The electrode terminal 216 may be electrically connected to a tab of an electrode assembly (for example, a current collector tab or a strip terminal connected to the current collector tab of FIG. 1) accommodated in the lower case 210. For example, the electrode terminal 216 may be formed on the fourth lower side surface 214_4 of the lower case 210, but the location may vary.

The upper case 220 may include an upper surface 222 and first to third upper side surfaces 224_1 to 224_3 extending from the upper surface 222. The upper surface 222 of the upper case 220 may extend from the fourth lower side surface 214_4 of the lower case 210. The first to third upper side surfaces 224_1 to 224_3 may extend substantially vertically (in the orientation shown) from the upper surface 222.

Referring to FIG. 3, the lower case 210 may be coupled to the upper case 220. The upper case 220 may be bent from the lower case 210 and coupled to the lower case 210. For example, the upper case (220) may be bent and coupled at a junction where the upper surface 222 of the upper case 220 and the fourth lower side surface 214_4 of the lower case 210 are in contact with each other. In this case, the first to third upper side surfaces 224_1 to 224_3 of the upper case 220 may be respectively coupled to the first to third lower side surfaces 214_1 to 214_3 of the lower case 210.

In a state in which the lower case 210 and the upper case 220 are coupled to each other, the first to third upper side surfaces 224_1 to 224_3 of the upper case 220 may overlap to cover at least a portion of the first to third lower side surfaces 214_1 to 214_3 of the lower case 210, respectively. For example, the second upper side surface 224_2 may include an overlapping portion 234_2 overlapping the second lower side surface 214_2. As another example, the third upper side surface 224_3 may include an overlapping portion 234_3 overlapping the third lower side surface 214_3. The first overlapping portion may be similar.

In an embodiment, the lower case 210 and the upper case 220 may be welded and coupled to each other. For example, the lower case 210 and the upper case 220 may be welded and coupled along the first to third overlapping portions 234_1 to 234_3.

In an embodiment, the lower case 210 and/or the upper case 220 may be formed through a punching process. For example, the lower case 210 may be pressed by a punching die having a shape corresponding to the lower surface (212) of the lower case 210. Accordingly, the lower surface 212 of the lower case 210 may be bent, and the first to fourth lower side surfaces 214_1 to 214_4 may be formed. Similarly, the upper case 220 may be processed by being pressed by a punching die having a shape corresponding to (e.g., matching) the upper surface 222 of the upper case 220. The processing method of the lower case 210 and/or the upper case 220 may vary, and the first to fourth lower side surfaces 214_1 to 214_4, respectively extending from the lower surface 212 of the lower case 210, may be bent and processed by a bending guide of the bending device.

With this configuration, the first to third overlapping portions 234_1 to 234_3, to which the lower case 210 and the upper case 220 are welded and coupled, are formed at the end portions of the first to third upper side surfaces 224_1 to 224_3 of the upper case 220, thereby improving efficiency of the welding process. For example, horizontal welding is possible along the side surface of the upper case 220, and the length of the welding section may be shortened.

With this configuration, the electrode terminal 216 is formed on the fourth lower side surface 214_4 of the lower case 210, so that the upper case 220 may not interfere with the electrode terminal 216. For example, only the first to third lower side surfaces 214_1 to 214_3, excluding the fourth lower side surface 214_4, of the side surfaces of the lower case 210, respectively overlap the first to third upper side surfaces 224_1 to 224_3 of the upper case 220, so that the upper case 220 may not interfere with the electrode terminal 216.

The electrode terminal 216 may be formed on at least one of the first to third lower side surfaces 214_1 to 214_3. In this case, the size and/or shape of the electrode terminal 216 and the widths of the first to third overlapping portions 234_1 to 234_3 may be adjusted so that the first to third overlapping portions 234_1 to 234_3 do not interfere with the electrode terminal 216.

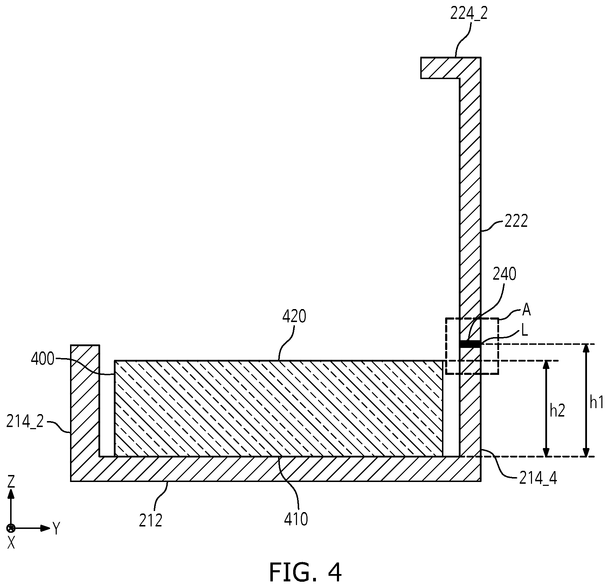

FIG. 4 illustrates a cross-sectional view of a contacting portion 240 between a lower case and an upper case according to an embodiment of the present invention. FIG. 4 illustrates a cross-sectional view taken along line I-I' of the case for the secondary battery shown in FIG. 3.

Referring to FIG. 4, the upper surface 222 of the upper case may be extended and bent from the fourth lower side surface 214_4 of the lower case. A bending line L may be formed at the contacting portion 240 where the upper surface 222 of the upper case and the fourth lower side surface 214_4 of the lower case are in contact with each other. The upper surface 222 of the upper case may be bent along the bending line L to seal the lower case.

The lower surface 212 of the lower case may be in contact with the first surface 410 of the electrode assembly 400 while the electrode assembly 400 is inserted into the lower case. After the electrode assembly 400 is inserted into the lower case, the upper case may be bent along the bending line L. In this case, the upper surface 222 of the upper case may be bent to cover the second surface 420 facing the first surface 410 of the electrode assembly 400.

In an embodiment, the bending line L along which the upper case is bent may be positioned at the upper portion of the electrode assembly 400 based on the thickness direction (Z-axis) of the electrode assembly 400. For example, a first distance h1, which is a vertical distance between the lower surface 212 of the lower case contacting the electrode assembly 400 and the bending line (L), may be greater than a second distance h2, which is a vertical distance between the lower surface 212 of the lower case and the second surface 420 of the electrode assembly 400. For example, the first distance h1 may be 102% or more of the second distance h2, but it may vary. Accordingly, it is possible to prevent interference between the upper case and the electrode assembly 400 in the process of bending the upper case.

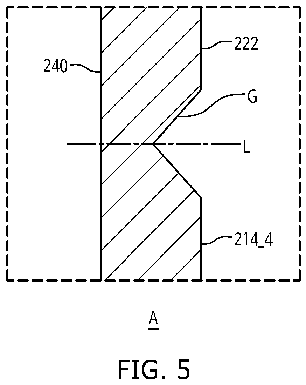

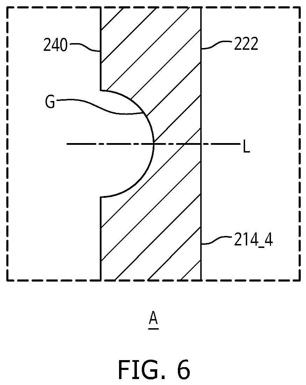

FIG. 5 illustrates an enlarged cross-sectional view of an example of a contacting portion 240 according to an embodiment of the present invention, and FIG. 6 illustrates an enlarged cross-sectional view of an example of a contacting portion 240 according to another embodiment of the present invention. FIG. 5 is an enlarged cross-sectional view of an example of area A of FIG. 4 in which the contacting portion 240 is illustrated, and FIG. 6 is an enlarged cross-sectional view of another example of area A of FIG. 4 in which the contacting portion 240 is illustrated.

A bending line L may be formed at the contacting portion 240 between the upper surface 222 of the upper case and the fourth lower side surface of the lower case. The contacting portion 240 may include a groove G formed along the bending line L.

Referring to FIG. 5, the groove G may have a notch shape cut in a V shape along the bend line L. In an embodiment, the groove G may be formed through a laser etching process, but the method of formation may vary. The groove G may be formed on an outer surface of the contacting portion 240 where the upper surface 222 of the upper case and the fourth lower side surface 214_4 of the lower case contact each other. The groove G is formed on the outer surface of the contacting portion 240, so that the upper case may be easily bent, and the ease of processing of the groove G may be increased.

Referring to FIG. 6, the groove G may be in the form of an R-shaped portion that is concave along the bending line L (e.g., groove G may be rounded). The groove G may be formed on an inner surface of the contacting portion 240 where the upper surface 222 of the upper case and the fourth lower side surface 214_4 of the lower case contact each other. The groove G is formed on the inner surface of the contacting portion 240, the upper case may be easily bent, and strength of a predetermined level or more may be secured at the contacting portion 240 at a position where the groove G is processed.

In FIG. 5, the notch-shaped groove G is illustrated as being formed on the outer surfaces of the upper surface 222 of the upper case and the fourth lower side surface 214_4 of the lower case, but the groove G may be formed on the inner surfaces of the upper surface 222 of the upper case and the fourth lower side surface 214_4 of the lower case.

Similarly, in FIG. 6, the R-shaped groove G is illustrated as being formed on the inner surfaces of the upper surface 222 of the upper case and the fourth lower side surface 214_4 of the lower case, but the groove G may be formed on the outer surfaces of the upper surface 222 of the upper case and the fourth lower side surface 214_4 of the lower case.

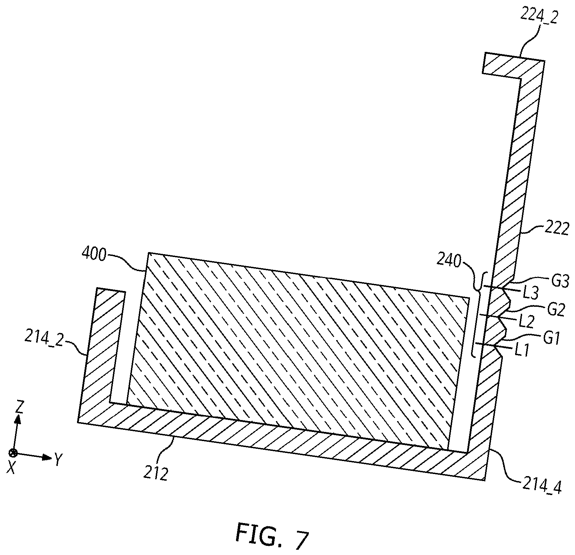

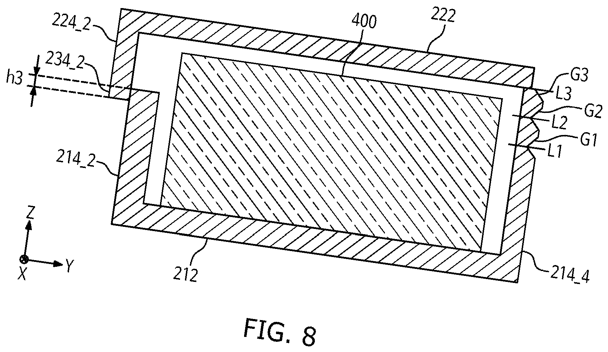

FIG. 7 and FIG. 8 illustrate cross-sectional views of an example of a lower case and an upper case according to an embodiment of the present invention. FIG. 7 illustrates a cross-sectional view of a state before the upper surface 222 of the upper case is bent, and FIG. 8 illustrates a cross-sectional view of a state after the upper surface 222 of the upper case is bent and coupled to the lower case.

Referring to FIG. 7, the upper surface 222 of the upper case may be extended and bent from the fourth lower side surface 214_4 of the lower case. A bending line L may be formed at the contacting portion 240 where the upper surface 222 of the upper case and the fourth lower side surface 214_4 of the lower case are in contact with each other. The upper surface 222 of the upper case may be bent along the bending line L to seal the lower case.

In an embodiment, a plurality of preliminary bending lines L1 to L3 may be formed at the contacting portion 240. The preliminary bending lines L1 to L3 may be parallel to each other. An interval between the preliminary bending lines L1 to L3 may be 1 mm or more, but may vary.

The upper surface 222 of the upper case may be bent along at least one of the preliminary bending lines L1 to L3. In this case, the bending line in which the upper surface 222 of the upper case is bent may be determined based on the thickness of the electrode assembly 400. For example, among the preliminary bending lines L1 to L3, a bending line along which the upper surface 222 of the upper case is bent may be positioned at the upper portion of the electrode assembly 400 based on the thickness direction (Z axis) of the electrode assembly 400. For example, the upper surface 222 of the upper case may be bent along a bending line (for example, L3 in FIG. 7) positioned at the upper portion of the upper surface 222 of the upper case among the preliminary bent lines L1 to L3.

Referring to FIG. 8, the upper case may be bent and coupled to the lower case. For example, the upper surface 222 of the upper case may be bent from the fourth lower side surface 214_4 of the lower case. The first to third upper side surfaces of the upper case may be coupled to the first to third lower side surfaces of the lower case, respectively. The first to third upper side surfaces of the upper case may overlap each other to cover at least a portion of the first to third lower side surfaces of the lower case, respectively.

In an embodiment, the second upper side surface 224_2 may include a second overlapping portion 234_2 (e.g., portions of lateral surfaces of the second overlapping portion 234_2 and the second lower side surface 214_2 may face and overlap each other along a direction parallel to the lower surface 212 of the lower case 210) overlapping to cover at least a portion of the second lower side surface 214_2. In this case, the width h3 of the second overlapping portion 234_2 may be 1 mm or more based on a direction in which the second upper side surface 224_2 extends from the upper surface 222 of the upper case.

Similarly, the first and third upper side surfaces may include first and third overlapping portions overlapping to cover at least a portion of the first and third lower side surfaces, respectively. In this case, the width of each of the first and third overlapping portions may be 1 mm or more based on the direction in which the first and third upper side surfaces extend from the upper surface 222 of the upper case. Accordingly, a minimum width for welding the upper case and the lower case at the first to third overlapping portions may be secured.

By this configuration, the upper case may be bent along at least one of the preliminary bending lines L1 to L3 within a range that ensures the minimum width for welding the upper case and the lower case together. Accordingly, the case for the secondary battery according to the present invention may be generally applied to electrode assemblies having various thicknesses.

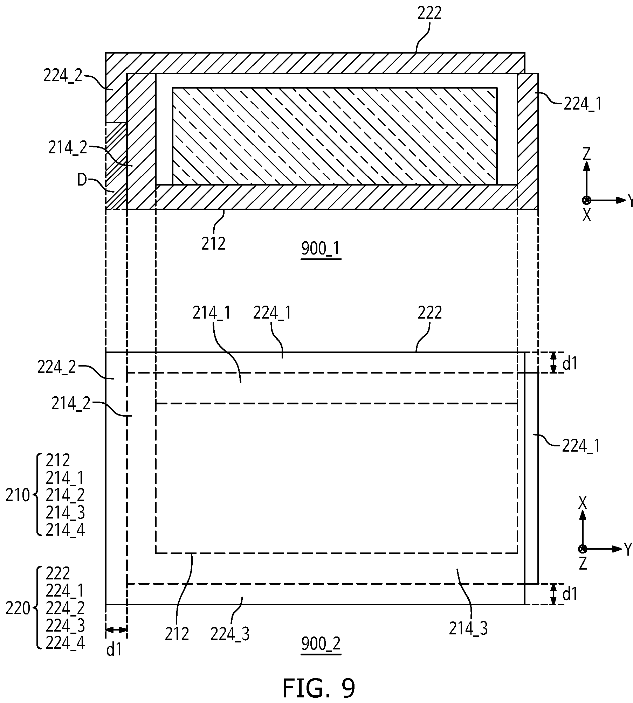

FIG. 9 illustrates a state in which a lower case 210 and an upper case 220 is are coupled according to an embodiment of the present invention. A first cross-sectional view 900_1 is a cross-sectional view illustrating a state in which the lower case 210 and the upper case 220 are coupled to each other, and a first plan view 900_2 is a top plan view illustrating a state in which the lower case 210 and the upper case 220 are coupled to each other as viewed from the upper case 220.

Referring to the first cross-sectional view 900_1 and the first top plan view 900_2, the first to third upper side surfaces 224_1 to 224_3 of the upper case 220 overlap each other to cover at least a portion of the first to third lower side surfaces 214_1 to 214_3 of the lower case 210, respectively.

The upper case 220 and the lower case 210 may be coupled at respective side surfaces thereof. In this case, the upper surface 222 of the upper case may protrude by a first length d1 from the lower surface 212 of the lower case 210 in each of the first upper side surface 224_1, the second upper side surface 224_2, and the third upper side surface 224_3 directions. The first length d1 may correspond to a thickness of the upper case 220. The first length d1 may be about 0.1 mm, but may be appropriately changed depending on the thickness of the upper case 220.

In an embodiment, as the first to third upper side surfaces 224_1 to 224_3 of the upper case 220 overlap and are coupled to the first to third lower side surfaces 214_1 to 214_3 of the lower case 210, respectively, a dead space D may be formed under the first to third upper side surfaces 224_1 to 224_3. Herein, the dead space D may refer to an empty space that is not used due to an exterior structure of the case due to the coupling of the upper case 220 and the lower case 210 without contributing to battery capacity.

By this configuration, the dead space D may be formed in three directions (for example, in directions of the first to third upper side surfaces 224_1 to 224_3), and the width thereof may be formed to have a first length d1 corresponding to the thickness of the upper case 220. Accordingly, the dead space D due to the coupling of the upper case 220 and the lower case 210 is minimized, so that the energy density of the battery may be increased.

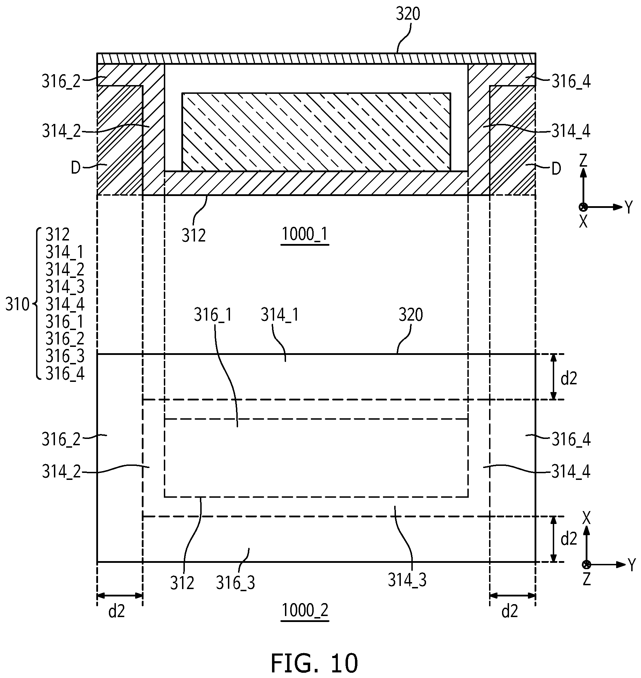

FIG. 10 illustrates a state in which a lower case 310 and an upper case 320 are coupled according to a comparative example. A second cross-sectional view 1000_1 is a cross-sectional view illustrating a state in which the lower case 310 and the upper case 320 according to a comparative example are coupled to each other, and the second top plan view 1000_2 is a top plan view illustrating a state in which the lower case 310 and the upper case 320 are coupled to each other according to a comparative example as viewed from the upper case 320.

Referring to the second cross-sectional view 1000_1 and the second top plan view 1000_2, the lower case 310 may include a lower surface 312 and first to fourth lower side surfaces 314_1 to 314_4 extending from the lower surface 312. First to fourth flange portions 316_1 to 316_4 may be formed at end portions of the first to fourth lower side surfaces 314_1 to 314_4, respectively. The first to fourth flange portions 316_1 to 316_4 may be bent from the first to fourth lower side surfaces 314_1 to 314_4 in an outward direction of the lower case 310, and may extend in a direction parallel to the lower surface 312 of the lower case 310.

The upper case 320 may be coupled to the first to fourth flange portions 316_1 to 316_4 of the lower case 310. The upper case 320 may be disposed to overlap the first to fourth flange portions 316_1 to 316_4 of the lower case 310. In some embodiments, the upper case 320 may be welded and coupled along an area overlapping the first to fourth flange portions 316_1 to 316_4 of the lower case 310. In this case, the first to fourth flange portions 316_1 to 316_4 may protrude to support the upper case 320 and secure a minimum space for welding-coupling with the upper case 320. For example, the first flange portion 316_1 may protrude by a second length d2 in a direction of the first lower side surface 314_1, the second flange portion 316_2 may protrude by the second length d2 in a direction of the second lower side surface 314_2, the third flange portion 316_3 may protrude by the second length d2 in a direction of the third lower side surface 314_3, and the fourth flange portion 316_4 may protrude by the second length d2 in a direction of the fourth lower side surface 314_4. Herein, the second length d2 may exceed about 0.1 mm, but the second length may vary.

As the first to fourth flange portions 316_1 to 316_4 for coupling with the upper case 320 are formed in the lower case 310, a dead space D may be formed under the first to fourth flange portions 316_1 to 316_4. For example, the dead space D may be formed in directions of four surfaces (for example, in directions of the first to fourth flange portions 316_1 to 316_3), and the width thereof may be formed to have the second length d2 corresponding to a protruding length of the first to fourth flange portions 316_1 to 316_3. That is, in the case of the coupling portion of the lower case 310 and the upper case 320 according to the comparative example, the dead space D may be formed larger compared to the coupling portion of the lower case and the upper case according to the present invention (for example, the coupling portion of the lower case 210 and the upper case 220 of FIG. 9).

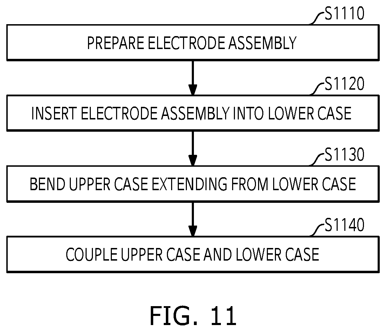

FIG. 11 illustrates a flowchart 1110 for explaining a method for manufacturing a secondary battery according to an embodiment of the present invention. The method for manufacturing the secondary battery may include preparing an electrode assembly (S1110). Herein, the electrode assembly may have a first surface and a second surface facing each other.

Then, the electrode assembly may be inserted into the lower case (S1120). Herein, the lower case may include a lower surface covering the first surface of the electrode assembly and first to fourth lower side surfaces extending from the lower surface. In addition, an electrode terminal may be formed on the fourth lower side surface of the lower case. Accordingly, the electrode assembly may be electrically connected to the electrode terminal formed on the fourth lower side surface.

Then, the upper case extending from the lower case may be bent (S1130). Herein, the upper case may include an upper surface extending from the fourth lower side surface of the lower case and covering the second surface of the electrode assembly, and first to third upper side surfaces extending from the upper surface. In addition, a bending line may be formed at a junction where the upper surface of the upper case and the fourth lower side surface of the lower case contact each other. Accordingly, the upper surface of the upper case may be bent along the bending line.

In an embodiment, a coupling portion where the upper surface of the upper case and the fourth lower side surface of the lower case contact each other may include a groove formed along a bending line. Additionally, the bending line may include a plurality of preliminary bending lines parallel to each other. In this case, the coupling portion where the upper surface of the upper case and the fourth lower side surface of the lower case contact each other may include a groove formed along each of the preliminary bending lines.

In an embodiment, the vertical distance between the lower surface of the lower case and the bending line may be 102% or more of the vertical distance between the lower surface of the lower case and the second surface of the electrode assembly.

Then, the upper case and the lower case may be coupled (S1140). In an embodiment, the first to third upper side surfaces of the upper case may include first to third overlapping portions overlapping each other to cover at least a portion of the first to third lower side surfaces of the lower case. Accordingly, the upper case and the lower case may be welded and coupled at the first to third overlapping portions.

In an embodiment, the width of the first to third overlapping portions may be 1 mm or more with respect to a direction in which the first to third upper side surfaces of the upper case extend from the upper surface of the upper case.

The flowchart in FIG. 11 and the above description are merely examples of the present invention. For example, one or more steps of the flowchart and the above description may be added, changed, or deleted, the order of one or more steps may be changed, and one or more steps may be simultaneously performed.

Recently, due to increasing customer demand for the reduction in weight and size of secondary batteries used in portable IT devices, automobiles, and other applications, research into small-sized and thin batteries is being actively conducted. Accordingly, efforts to reduce the dead space inside and outside the battery are ongoing. For example, methods are being proposed to increase the energy density of the battery by minimizing portions that do not contribute to battery capacity.

Meanwhile, secondary batteries are manufactured by inserting an electrode assembly into a case and then sealing a cap assembly and/or a case cover. The case may be welded and coupled to the cap assembly and/or the case cover, and in this case, a dead space may also occur in at the coupling portion between the case and the cap assembly or the case and the case cover. Accordingly, efforts are being made to minimize the dead space that occurs at the coupling portion between the case and the cap assembly or the case and the case cover.

According to some embodiments of the present invention, the first to third overlapping portions, in which the lower case and the upper case are welded together, are formed at the end portions of the first to third upper side surfaces of the upper case, so that the efficiency of the welding process may be improved. Specifically, horizontal welding is possible along the side surface of the upper case, and the length of the welding section may be shortened.

According to some embodiments of the present invention, the electrode terminal is formed at the fourth lower side surface of the lower case, so that the upper case may not interfere with the electrode terminal. That is, only the first to third lower side surfaces of the lower case, excluding the fourth lower side surface, overlap the first to third upper side surfaces of the upper case, respectively, so that the upper case may not interfere with the electrode terminal.

According to some embodiments of the present invention, a groove is formed on the outer surface of a contacting portion where the upper surface of the upper case and the fourth lower side surface of the lower case contact each other, so that not only may the upper case be easily bent, but also the ease of groove processing may be increased.

According to some embodiments of the present invention, a groove is formed on the inner surface of a contacting portion where the upper surface of the upper case and the fourth lower side surface of the lower case contact each other, so that not only may the upper case be easily bent, but also a certain level of strength or higher may be secured at the contacting portion where the groove is processed.

According to some embodiments of the present invention, the case is bent along one of a plurality of preliminary bending lines, so that electrode assemblies of various thicknesses may be accommodated.

According to some embodiments of the present invention, dead space due to the coupling of the upper case and the lower case is minimized, so that the energy density of the battery may be increased.

Although the present invention has been described above with respect to embodiments thereof, the present invention is not limited thereto. Various modifications and variations can be made thereto by those skilled in the art within the spirit of the present invention and the equivalent scope of the appended claims.

### [DESCRIPTION OF SOME REFERENCE SYMBOLS]

110: electrode assembly
120: first current collector tab
130: second current collector tab
140: case
150: electrode terminal
160: insulating member
170: cap assembly

## Claims

1. A secondary battery, comprising: an electrode assembly (110, 400) having a first surface (410) and a second surface (420) facing each other;
a lower case (210) comprising a lower surface (212) covering the first surface (410) of the electrode assembly (110, 400) and first to fourth lower side surfaces (214_1, 214_2, 214_3, 214_4) extending from the lower surface (212); and
an upper case (220) comprising an upper surface (222) and first to third upper side surfaces (224_1, 224_2, 224_3) extending from the upper surface (222), the upper surface (222) being bent and extending from the fourth lower side surface (214_4) of the lower case (210) and covering the second surface (420) of the electrode assembly (110, 400),
wherein the first to third upper side surfaces (224_1, 224_2, 224_3) of the upper case (220) are respectively coupled to the first to third lower side surfaces (214_1, 214_2, 214_3) of the lower case (210).

2. The secondary battery according to claim 1, wherein the first to third upper side surfaces (224_1, 224_2, 224_3) of the upper case (220) each comprise first to third overlapping portions (234_1, 234_2, 234_3) overlapping each other to cover at least a portion of the first to third lower side surfaces (214_1, 214_2, 214_3) of the lower case (210).

3. The secondary battery according to claim 2, wherein widths (h3) of the first to third overlapping portions (234_1, 234_2, 234_3) are 1 mm or more based on a direction in which the first to third upper side surfaces (224_1, 224_2, 224_3) of the upper case (220) extend from the upper surface (222) of the upper case (220).

4. The secondary battery according to claim 2 or 3, wherein the upper case (220) and the lower case (210) are welded and coupled at the first to third overlapping portions (234_1, 234_2, 234_3).

5. The secondary battery according to any of claims 1 to 4, wherein a bending line (L, L1, L2, L3) along which the upper case (220) is bent is at a contacting portion (240) where the upper surface (222) of the upper case (220) and a fourth lower side surface (214_4) of the first to fourth lower side surfaces (214_1, 214_2, 214_3, 214_4) of the lower case (210) contact each other.

6. The secondary battery according to claim 5, wherein a vertical distance (h1) between the lower surface (212) of the lower case (210) and the bending line (L, L1, L2, L3) is 102% or more of a vertical distance (h2) between the lower surface (212) of the lower case (210) and the second surface (420) of the electrode assembly (110, 400).

7. The secondary battery according to claim 5 or 6, wherein the contacting portion (240) comprises a groove (G) on outer surfaces or a groove (G) on inner surfaces of the upper case (220) and the lower case (210) along the bending line (L).

8. The secondary battery according to any of claims 5 to 7, wherein:
the bending line (L) comprises a plurality of preliminary bending lines (L1, L2, L3) parallel to each other, and
the contacting portion (240) comprises a groove (G) along each of the preliminary bending lines (L1, L2, L3).

9. The secondary battery according to any of claims 1 to 8, further comprising an electrode terminal (150, 216) electrically connected to the electrode assembly (110, 400), wherein the electrode terminal (150, 216) is on one surface of the lower case (210).

10. The secondary battery according to claim 9, wherein the electrode terminal (216) is on the fourth lower side surface (214_4) of the lower case (210).

11. The secondary battery according to any of claims 1 to 10, wherein the upper case (220) and the lower case (210) are at least partially made of a stainless steel material.

12. A method of manufacturing a secondary battery, the method comprising: preparing an electrode assembly (110, 400);
inserting the electrode assembly (110, 400) into a lower case (210);
bending an upper case (220) extending from the lower case (210); and coupling the upper case (220) and the lower case (210), wherein: the electrode assembly (110, 400) comprises a first surface (410) and a second surface (420) facing each other,
the lower case (210) comprises a lower surface (212) covering the first surface (410) of the electrode assembly (110, 400) and first to fourth lower side surfaces (214_1, 214_2, 214_3, 214_4) extending from the lower surface (212), and
the upper case (220) comprises an upper surface (222) extending from a fourth lower side surface (214_4) of the first to fourth lower side surfaces (214_1, 214_2, 214_3, 214_4) of the lower case (210) and covering the second surface (420) of the electrode assembly (110, 400), the upper case (220) including first to third upper side surfaces (224_1, 224_2, 224_3) extending from the upper surface (222).

13. The method of manufacturing the secondary battery according to claim 12, wherein:
a bending line (L, L1, L2, L3) is formed at a contacting portion (240) where the upper surface (222) of the upper case (220) and the fourth lower side surface (214_4) of the lower case (210) contact each other, and
the bending comprises bending the upper surface (222) of the upper case (220) along the bending line (L, L1, L2, L3).

14. The method of manufacturing the secondary battery according to claim 12 or 13, wherein:
the first to third upper side surfaces (224_1, 224_2, 224_3) of the upper case (220) each comprise first to third overlapping portions (234_1, 234_2, 234_3) overlapping each other to cover at least a portion of the first to third lower side surfaces (214_1, 214_2, 214_3) of the lower case (210), and
the coupling comprises welding-coupling the upper case (220) and the lower case (210) in the first to third overlapping portions (234_1, 234_2, 234_3).

15. The method of manufacturing the secondary battery according to any of claims 12 to 14, wherein:
an electrode terminal (216) is formed on the fourth lower side surface (214_4) of the lower case (210), and
the inserting comprises electrically connecting the electrode assembly (110, 400) to the electrode terminal (216).
